# EUROPÄISCHE PATENTSCHRIFT

(11) **EP 2 417 927 B1**
(45) Veröffentlichungstag und Bekanntmachung des Hinweises auf die Patenterteilung: **15.05.2013**
(21) Anmeldenummer: 11002174.8
(22) Anmeldetag: 16.03.2011
(51) Int. Cl.: A61C 5/14, A63B 71/08

(54) **Dentales Tiefziehmaterial**
Dental thermoforming material
Matériau dentaire destiné à tirer vers le bas

(30) Priorität: 28.07.2010 DE 202010010769 U
(43) Veröffentlichungstag der Anmeldung: 15.02.2012
(73) Patentinhaber: SCHEU-DENTAL GmbH, 58642 Iserlohn (DE)
(72) Erfinder: Scheu, Christian, 44265 Dortmund (DE); Tschackert, Steffen, Dr., 60313 Frankfurt (DE)
(74) Vertreter: Isfort, Olaf

(56) Entgegenhaltungen:
- EP-A1- 1 402 927
- DE-A1-102008 061 325
- US-A- 4 448 735

## Beschreibung

Die Erfindung betrifft eine Tiefziehfolie oder -platte aus einem thermoplastischen Elastomer zur Herstellung von Dentalschienen.

Thermoplastische Kunststofffolien oder -platten sind seit langem in der dentalen Tiefziehtechnik bekannt. Dokument DE-A-102008061325 zeigt ein Verfahren zur Herstellung einer mehrschichtigen Dentalschiene in einem Tiefziegerät.

Beim Tiefziehen wird die Folie oder Platte, welche zumeist aus thermoplastischen Elastomeren auf Basis von EVA (Ethylen-Vinyl-Acetat) besteht, durch Erwärmung aufgeweicht und über ein abzuformendes Modell gezogen. Nach dem Erkalten wird die so geformte Folie oder Platte von dem Modell entfernt und einer weiteren Feinbearbeitung unterzogen.

Auf diese Weise lassen sich unter anderem spezielle Mundschutzschienen für den Einsatz beim Sport oder auch Positioner zur Korrektur oder Stabilisierung der Zahnstellung herstellen.

Für bestimmte Anwendungen, insbesondere für die Herstellung von Mundschutzschienen, besteht der Wunsch, Verstärkungen in bestimmte Bereiche der Schiene einzubringen. Hierdurch kann eine bessere Druckverteilung auf die Zähne und/oder den Kiefer gewährleistet werden, falls der Anwender einem Sturz oder Schlag beim Sport ausgesetzt ist oder die Zähne stark aufeinander beißt, wie es bei bestimmten Sportarten oder beim nächtlichen Pressen und Zähneknirschen geschieht.

Bisher werden solche Verstärkungen durch einen mehrschichtigen Aufbau der Schiene erreicht. Hierzu ist jedoch stets ein zusätzlicher Arbeitsgang erforderlich, welcher einen erhöhten Zeit- und Kostenaufwand mit sich bringt. Daneben existieren im Stand der Technik spezielle mehrschichtige Folien, welche eine Verstärkungsschicht beinhalten. Hier ist zur Herstellung der Schiene zwar nur ein Arbeitsschritt erforderlich, jedoch übergreift die Verstärkung dabei die gesamte Folie und damit auch die gesamte Schiene. Eine nur lokale Verstärkung der Schiene in besonderen Zahnbereichen und damit eine gezielt angepasste Druckverteilung lässt sich mit diesen Tiefziehfolien nicht erreichen.

Es ist daher Aufgabe der vorliegenden Erfindung, eine Tiefziehfolie oder -platte zu schaffen, welche gleichzeitig die Herstellung und lokale Verstärkung der Zahnschiene In nur einem Arbeitsgang erlaubt.

Diese Aufgabe löst die vorliegende Erfindung dadurch, dass die Tiefziehfolie oder -platte in der Ebene der Tiefziehfolie oder -platte nebeneinander liegende Segmente aus verschiedenen Materialien aufweist, wobei die Materialien unterschiedliche Shore-Härten aufweisen. Durch eine solche Tiefziehfolie oder -platte aus mehreren nebeneinander liegenden Segmenten, die unterschiedliche Share-Härten aufweisen, ist es möglich, in nur einem Tiefziehprozess eine Schiene mit verschieden harten Bereichen herzustellen. Auf diese Weise lassen sich individuell an den Träger und den Anwendungszweck angepasste Schienen herstellen, welche in einzelnen Bereichen besonders hart oder weich ausgebildet sind. Die Verteilung der harten und weichen Segmente in der Ebene der Folie oder Platte ist dabei frei wählbar. Produktionstechnisch sind alle beliebigen Verteilungen und Härtedifferenzen möglich.

Die Erfindung sieht vor, dass die Segmente mittels Fügeverfahren, insbesondere mittels Hochfrequenzschweißen, miteinander verbunden sind. Insbesondere das Hochfrequenzschweißen ist ein gängiges Fügeverfahren, mittels welchem Kunststoffe miteinander verbunden werden. Bei der Herstellung von Tiefziehfolien und/oder -platten wird dieses Verfahren für den mehrschichtigen Aufbau von Folien bereits erfolgreich eingesetzt.

Eine Ausführungsvariante der Erfindung sieht vor, dass die Tiefziehfolie oder-platte ein mittig angeordnetes streifenförmiges Verstärkungssegment und symmetrisch daran angrenzende Neutralsegmente aufweist. Auf diese Weise lassen sich Schienen herstellen, die im Frontzahnbereich besonders verstärkt sind. Hierzu wird die Tiefziehfolie über dem Modell so angeordnet, dass das Segment mit der höheren Shore-Härte (Verstärkungssegment) über den Frontzähnen zum Liegen kommt, während die angrenzenden Neutralsegmente der Folie mit etwas geringerer Shore-Härte über den restlichen Zähnen ruhen.

Eine besonders vorteilhafte Ausführung der Erfindung sieht vor, dass die Tiefziehfolie oder -platte ein mittig angeordnetes, V-förmiges Verstärkungssegment und symmetrisch daran angrenzende Neutralsegmente aufweist. Durch das V-förmige Verstärkungssegment können mit der erfindungsgemäßen Tiefziehfolie oder -platte unterschiedliche Kiefergrößen abgedeckt werden, je nachdem in welchem Bereich der V-Form das Kiefermodell zum Liegen kommt. Somit wird das härtere Material des Verstärkungssegmentes, das die Frontzähne schützen soll, hinsichtlich der Breite an die Kiefergröße angepasst.

Eine weitere Ausführungsvariante sieht vor, dass die Tiefziehfolie oder -platte ein mittig angeordnetes streifenförmiges Neutralsegment und symmetrisch daran angrenzende Verstärkungssegmente aufweist. Eine solche Folie lässt sich zur Herstellung von Schienen verwenden, welche insbesondere in der Kauebene verstärkt werden sollen. Das Neutralsegment geringerer Härte wird dabei auf die Frontzähne abgebildet, während die Verstärkungssegmente mit höherer Shore-Härte im Bereich der Kauebene zum Liegen kommen.

Neben diesen beiden Ausführungsvarianten können überdies beliebig viele andere Verteilungen vorgenommen werden. Insbesondere ist es auch denkbar, mehr als zwei voneinander verschiedene Materialien für die Tiefziehfolie oder - platte zu verwenden. Durch eine solche Folie oder Platte mit mehr als zwei verschiedenen Härtegraden lässt sich der Härteverlauf über die Ausdehnung der Folie oder Platte feiner abstufen und auf die speziellen Erfordernisse des Trägers oder Anwendungsbereiches anpassen.

Zusätzlich kann es vorgesehen sein, die Segmente unterschiedlicher Härte auf der Folie oder Platte für den Dentaltechniker sichtbar zu machen, indem eine Einfärbung des Materials vorgenommen wird. Ebenso ließe sich eine solche mehrfarbige Folie oder Platte auch herstellen, falls der Träger eine besondere dekorative Farbigkeit seiner Schiene wünscht. Die Farbigkeit kann dabei auch unabhängig von den Grenzen der einzelnen Segmente gestaltet sein.

Eine Ausführungsvariante der Erfindung sieht vor, dass die Tiefziehfolie oder - platte nur eine Segmentebene aufweist. Diese einschichtige Ausgestaltung ist in den meisten Fällen zweckmäßig und ausreichend, um eine lokal verstärkte Mundschutzschiene zu erreichen.

Alternativ kann die Tiefziehfolie oder -platte aber auch zwei oder mehr zueinander parallele und übereinander liegende Segmentebenen aufweisen. Durch einen solchen mehrschichtigen Aufbau ist eine weitere Verstärkung der Mundschutzschiene möglich. Ebenso ergibt sich eine Vielzahl neuer Möglichkeiten, um eine Abstufung der Härtegrade zu erreichen oder auch Muster, wie z. B. eine karierte Struktur, über die Mundschutzschiene zu legen. Des Weiteren kann eine der Ebenen des mehrschichtigen Aufbaus mehrere nebeneinander liegende Segmente enthalten, während eine andere Ebene aus einem einzigen Segment besteht.

Vorteilhaft ist die Tiefziehfolie oder -platte so ausgebildet, dass die übereinander liegenden Segmentebenen unterschiedliche Shore-Härten aufweisen. Dies wird dadurch erreicht, dass in den Segmentebenen Segmente (1,2) mit unterschiedlichen Shore-Härten verwendet werden. Bei Ausführungsvarianten, welche eine Segmentebene mit mehreren Segmenten (1, 2) und eine Segmentebene mit nur einem Segment aufweisen, empfiehlt es sich, unterschiedliche Härten zu verwenden, so dass die Ebene mit nur einem Segment neben ihrer Trägerfunktion beispielsweise gleichzeitig eine mehr oder weniger verstärkende Funktion übernimmt.

Die Erfindung sieht weiterhin ein Set aus tiefziehfähigen Elementen zur Herstellung von Dentalschienen vor, welches eine erfindungsgemäße Tiefziehfolie oder -platte aufweist, sowie einen Kieferbogenschild und eine Basisfolie. Bei der Herstellung einer Zahnschiene aus einem solchen Set wird der Kieferbogenschild parallel zu und zwischen der Basisfolie und der Tiefziehfolie oder -platte angeordnet ist. Der Kieferbogenschild dient dabei als zusätzliches Verstärkungselement aus Hartkunststoff, welches mit der Tiefziehfolie oder -platte verbunden wird. Die Zahnschiene wird von einem Zahntechniker dadurch hergestellt, dass er in zu der Kiefergröße passendem Umfang auf der Tiefziehfolie oder -platte einen Kieferbogenschild auflegt, welcher bereits die Form des Kiefers aufweist. Anschließend wird zur Verbindung mit der Tiefziehfolie oder -platte eine Basisfolie auf den Kieferbogenschild aufgelegt, so dass der Kieferbogenschild zwischen Tiefziehfolie oder -platte und der Basisfolie zum Liegen kommt. Nach dem Tiefziehen der so angeordneten Elemente liegt der Kieferbogenschild so über den Zähnen des Benutzers, dass Schläge oder Stöße (z.B. beim Sport) gleichmäßig auf die Zähne verteilt werden. Die hergestellte Zahnschiene besteht insgesamt aus einem 4-lagigen Verbund, welcher von außen nach innen die 2-lagige Tiefziehfolie oder -platte, den Kieferbogenschild und die Basisfolie umfasst.

Ausführungsbeispiele der Erfindung werden im Folgenden anhand der Figuren näher erläutert. Es zeigen:
- Figur 1:: eine Draufsicht auf eine eifindungsgemäße Tiefziehfolie oder -platte mit einem streifenförmigen Verstärkungssegment,
- Figur 2:: eine Draufsicht auf eine erfindungsgemäße Tiefziehfolie oder -platte mit einem V-förmigen Verstärkungssegment,
- Figur 3:: eine Schnittdarstellung eines Tiefziehfolienverbundes aus einem Set aus tiefziehfähigen Elementen.

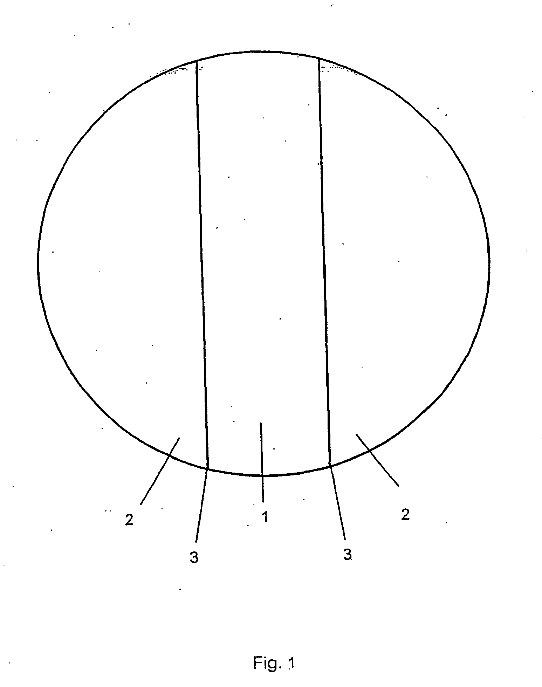

In Figur 1 ist eine Tiefziehfolie dargestellt, welche ein mittig angeordnetes streifenförmiges Verstärkungssegment 1 und zwei symmetrisch daran angrenzende Neutralsegment 2 umfasst. Das Verstärkungssegment 1 ist durch Schweißnähte 3 von den Neutralsegmenten 2 getrennt.

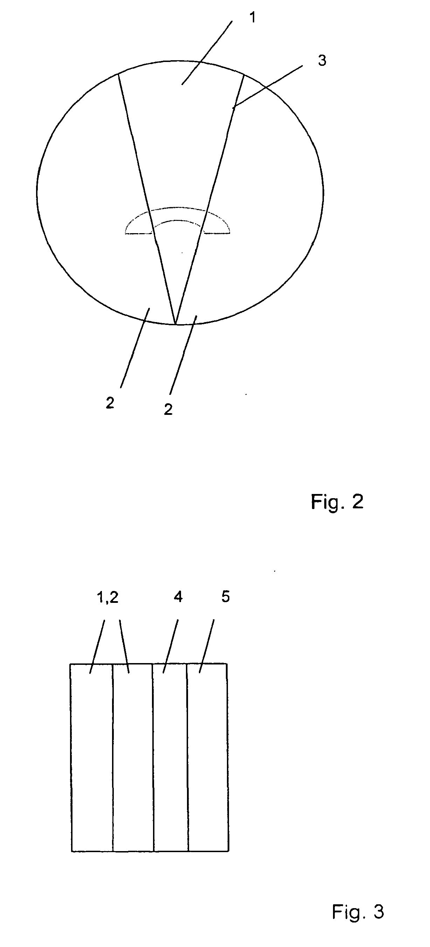

Figur 2 zeigt eine Tiefziehfolie mit einem V-förmigen Verstärkungssegment 1 und zwei symmetrisch daran angrenzenden Neutralsegmenten 2. Unter dieser Segmentebene befindet sich eine - nicht dargestellte - zweite Segmentebene, welche nur ein Segment umfasst. Diese zweite Segmentebene besteht aus einem weicheren Material als die Segmente der ersten Ebene.

Der Verbund gemäß Figur 3 zeigt in einer seitlichen Ansicht vier Ebenen aus tiefziehfähigem Material. Die Außenseite der späteren Zahnschiene wird dabei durch die linke Seite des Folienverbundes gebildet, die Innenseite der Schiene durch die rechte Seite des Folienverbundes. Von außen nach innen besteht der Tiefziehfolienverbund aus der Tiefziehfolie oder -platte 1, 2, welche zweilagig ausgeführt ist, sowie aus einem Kieferbogenschild 4 und einer Basisfolie 5.

Die Tiefziehfolien gemäß den Figuren 1 und 2 werden zur Herstellung von Mundschutzschienen verwendet, bei welchen insbesondere die Frontzähne durch eine Verstärkung der Schiene in diesem Bereich geschützt werden sollen.

Für die erfindungsgemäßen Tiefziehfolien werden ein streifenförmiges (Figur 1) oder V-förmiges (Figur 2) Verstärkungssegment 1 und zwei symmetrisch daran angrenzende Neutralsegmenten 2 aus thermoplastischen Elastomeren mit unterschiedlichen Shore-Härten nebeneinander gelegt und mittels Hochfrequenzschweißen miteinander verbunden.

Die so hergestellte Folie wird dann vom Zahntechniker über ein Zahnmodell gelegt, wobei er das Verstärkungssegment 1 und die beiden Neutralsegmente 2 so über dem Modell anordnet, dass das Verstärkungssegment 1 mit der größeren Shore-Härte über den Frontzähnen ruht, während die Neutralsegmente 2 über den weiteren Zähnen zum Liegen kommen. Im Falle der Tiefziehfolie gemäß Figur 2 wählt der Zahntechniker einen zu der Kiefergröße passenden Ausschnitt des V-förmigen Bereichs.

Das weitere Tiefziehverfahren erfolgt wie bei den üblichen Tiefziehfolien im Stand der Technik. Weitere Arbeitsgänge zur Verstärkung der Schiene sind nicht erforderlich.

Der Tiefziehfolienverbund gemäß der Figur 3 wird zur Herstellung besonders beanspruchter Zahnschienen verwendet, insbesondere zum Schutz des Trägers bei Sportarten mit erhöhter Gefährdung, wie z.B. Eishockey. Zur Herstellung des Verbundes wird eine Tiefziehfolie oder -platte gemäß Figur 1 oder 2 (oder auch davon abweichende Varianten) verwendet. Ein Kieferbogenschild 4 passender Größe wird anschließend auf die Tiefziehfolie oder -platte in geeignetem Umfang des streifenförmigen oder V-förmigen Verstärkungssegmentes 1 aufgelegt und mit einer Basisfolie 5 bedeckt. Danach werden die Schichten durch Tiefziehen miteinander verbunden. Hierfür wird der Folienstapel vom Zahntechniker wie üblich über ein Zahnmodell gelegt, wobei die Basisfolie 5 in Richtung des Zahnmodells zeigt. Weiterhin wird der Verbund so ausgerichtet, dass der Kieferbogenschild 4 exakt über dem Bogen des Kiefermodells liegt. Das weitere Tiefziehverfahren erfolgt auch hier wie bei den üblichen Tiefziehfolien im Stand der Technik.

## Patentansprüche

1. Tiefziehfolie oder -platte aus einem thermoplastischen Elastomer zur Herstellung von Dentalschienen, **dadurch gekennzeichnet, dass** die Tiefziehfolie oder -platte in der Ebene der Tiefziehfolie oder -platte nebeneinander liegende Segmente (1, 2) aus verschiedenen Materialien aufweist, wobei die Materialien unterschiedliche Shore-Härten aufweisen.

2. Tiefziehfolie oder -platte nach Anspruch 1, **dadurch gekennzeichnet, dass** die Segmente (1, 2) mittels Fügeverfahren, insbesondere mittels Hochfrequenzschweißen, miteinander verbunden sind.

3. Tiefziehfolie oder -platte nach Anspruch 1 oder 2, **gekennzeichnet durch** ein mittig angeordnetes, streifenförmiges Verstärkungssegment (1) und symmetrisch daran angrenzende Neutralsegmente (2).

4. Tiefziehfolie oder -platte nach Anspruch 1 oder 2, **gekennzeichnet durch** ein mittig angeordnetes, V-förmiges Verstärkungssegment (1) und symmetrisch daran angrenzende Neutralsegmente (2).

5. Tiefziehfolie oder -platte nach Anspruch 1 oder 2, **gekennzeichnet durch** ein mittig angeordnetes Neutralsegment (1) und symmetrisch daran angrenzende Verstärkungssegmente (2).

6. Tiefziehfolie oder -platte nach Anspruch 1 oder 2, **gekennzeichnet durch** mehr als zwei voneinander verschiedene Materialien.

7. Tiefziehfolie oder -platte nach einem der Ansprüche 1 bis 6, **dadurch gekennzeichnet, dass** die Tiefziehfolie oder -platte nur eine Segmentebene aufweist.

8. Tiefziehfolie oder -platte nach einem der Ansprüche 1 bis 6, **dadurch gekennzeichnet, dass** die Tiefziehfolie oder -platte zwei oder mehr zueinander parallele und übereinander liegende Segmentebenen aufweist.

9. Tiefziehfolie oder -platte nach Anspruch 8, **dadurch gekennzeichnet, dass** die übereinander liegenden Segmentebenen unterschiedliche Shore-Härten aufweisen.

10. Set aus tiefziehfähigen Elementen zur Herstellung von Dentalschienen, **gekennzeichnet durch** eine Tiefziehfolie oder -platte nach einem der Ansprüche 1 bis 9, einen Kieferbogenschild (4) und eine Basisfolie (5).

11. Mundschutzschiene, hergestellt aus einer Tiefziehfolie oder -platte nach einem der Ansprüche 1 bis 9.

12. Mundschutzschiene, hergestellt aus einem Tiefziehfolienverbund nach Anspruch 10.

## Claims

1. Thermo-forming foil or plate made of a themoplastic elastomer for the production of dental splints, **characterized d in that** the thermo-forming foil or plate in the plane of the thermo-forming foil or plate is comprised of segments (1, 2) lying side by side and made of different materials, the materials having different Shore hardness.

2. Thermo-forming foil or plate according to claim 1, **characterized in that** the segments (1, 2) are connected with each other by means of joining procedures, more particularly by means of high-frequency welding.

3. Thermo-forming foil or plate according to claim 1 or 2, **characterized by** a centrally arranged stripe-shaped reinforcing segment (1) and adjacent symmetrically arranged neutral segments (2).

4. Thermo-forming foil or plate according to claim 1 or 2, **characterized by** a centrally arranged V-shaped reinforcing segment (1) and adjacent symmetrically arranged neutral segments (2).

5. Thermo-forming foil or plate according to claim 1 or 2, **characterized by** a centrally arranged neutral segment (1) and adjacent symmetrically arranged reinforcing segments (2).

6. Thermo-forming foil or plate according to claim 1 or 2, **characterized by** more than two differing materials.

7. Thermo-forming foil or plate according to any of the preceding claims 1 to 6, **characterized in that** the thermo-forming foil or plate is comprised of one segment plane only.

8. Thermo-forming foil or plate according to any of the preceding claims 1 to 6, **characterized in that** the thermo-forming foil or plate is comprised of two or more segment planes lying in parallel to and above each other.

9. Thermo-forming foil or plate according to claim 8, **characterized in that** the segment planes lying above each other have different Shore hardness.

10. Set of thermo-formable elements for the production of dental splints, **characterized by** a thermo-forming foil or plate according to any of the preceding claims 1 to 9, a mandibular arch shield (4) and a base foil (5).

11. Mouthguard splint, produced from a thermo-forming foil or plate according to any of the preceding claims 1 to 9.

12. Mouthguard splint, produced from a thermo-forming foil composite according to claim 10.

## Revendications

1. Feuille ou plaque d'emboutissage en matériau élastomère thermoplastique pour la réalisation de gouttières dentaires, **caractérisée en ce que** ladite feuille ou plaque d'emboutissage comporte des segments (1, 2) réalisés dans des matériaux différents, disposés les uns à côté des autres dans le plan de ladite feuille ou plaque d'emboutissage, lesdits matériaux ayant des duretés Shore différentes.

2. Feuille ou plaque d'emboutissage selon la revendication 1, **caractérisée en ce que** les segments (1, 2) sont reliés entre eux au moyen d'un procédé d'assemblage, en particulier un soudage à haute fréquence.

3. Feuille ou plaque d'emboutissage selon la revendication 1 ou 2, **caractérisée par** un segment de renforcement (1) en forme de bande, disposé au milieu, et des segments neutres (2) symétriquement adjacents à celui-ci.

4. Feuille ou plaque d'emboutissage selon la revendication 1 ou 2, **caractérisée par** un segment de renforcement (1) en forme de V, disposé au milieu, et des segments neutres (2) symétriquement adjacents à celui-ci.

5. Feuille ou plaque d'emboutissage selon la revendication 1 ou 2, **caractérisée par** un segment neutre (1) disposé au milieu et des segments de renforcement (2) symétriquement adjacents à celui-ci.

6. Feuille ou plaque d'emboutissage selon la revendication 1 ou 2, **caractérisée par** plus de deux matériaux différents les uns des autres.

7. Feuille ou plaque d'emboutissage selon l'une quelconque des revendications 1 à 6, **caractérisée en ce que** ladite feuille ou plaque d'emboutissage comporte seulement un plan de segments.

8. Feuille ou plaque d'emboutissage selon l'une quelconque des revendications 1 à 6, **caractérisée en ce que** ladite feuille ou plaque d'emboutissage comporte deux plans de segments ou davantage, parallèles entre eux et superposés.

9. Feuille ou plaque d'emboutissage selon la revendication 8, **caractérisée en ce que** les plans de segments superposés ont des duretés Shore différentes.

10. Ensemble d'éléments emboutissables pour la réalisation de gouttières dentaires, **caractérisé par** une feuille ou plaque d'emboutissage selon l'une quelconque des revendications 1 à 9, un blindage cintré maxillaire (4) et une feuille de base (5).

11. Gouttière dentaire, réalisée à partir d'une feuille ou plaque d'emboutissage selon l'une quelconque des revendications 1 à 9.

12. Gouttière dentaire, réalisée à partir d'un ensemble de feuilles d'emboutissage selon la revendication 10.
